Europäisches Patentamt

European Patent Office

Office européen des brevets

(11) Veröffentlichungsnummer: **0 511 468 A1**

## (12) EUROPÄISCHE PATENTANMELDUNG

(21) Anmeldenummer: **92103121.7**

(22) Anmeldetag: **25.02.92**

(51) Int. Cl.5: **G09F 3/20**

(30) Priorität: **27.04.91 DE 9105221 U**

(43) Veröffentlichungstag der Anmeldung:
**04.11.92 Patentblatt 92/45**

(84) Benannte Vertragsstaaten:
**BE ES FR LU NL SE**

(71) Anmelder: **REHAU AG + Co**
**Rheniumhaus**
**W-8673 Rehau(DE)**

(72) Erfinder: **Wunner, Norbert**
**Am Hang 6**
**W-8670 Hof(DE)**

(54) **Halterung für auswechselbare Informationsträger.**

(57) Die Erfindung betrifft eine Halterung für auswechselbare Informationsträger mit einem Befestigungsteil zum Festlegen an Randbereichen von Regalen, Behältern und dergleichen. Das Befestigungsteil ist dabei annähernd C-förmig gestaltet und weist an seinen freien Enden aufeinander zugerichtete Aufnahmenuten für entsprechend ausgebildete Stege auf. Diese Stege sind an der Rückseite der aus einer Rückwand und einer transparenten Vorderwand gebildeten Aufnahmetasche für die Informationsträger ausgeformt. Das kennzeichnende der Erfindung wird darin gesehen, daß der eine Steg als Einhängelasche für die zugeordnete Aufnahmenut des Befestigungsteils mit einem annähernd rechtwinkelig von der Rückseite aufragenden Basisteil und einem kurzen, zum freien Rand der Rückseite geneigten Halteteil ausgebildet ist. Der andere Steg ist in kurzem Abstand vom ersten Steg ebenfalls aus einem annähernd rechtwinkelig von der Rückseite aufragenden Basisteil gebildet. Dieses Basisteil geht in einen langgestreckten, in Gegenrichtung zum Halteteil abgebogenen Halteelement über, dessen freies Ende vor der gegenüberliegenden freien Kante der Rückseite endet. An der Rückseite selbst ist in definiertem Abstand vom Basisteil des Steges längs verlaufend wenigstens ein Druckelement angeformt, welches von dem abgebogenem Halteelement übergriffen ist.

Fig. 1a

Die Erfindung betrifft eine Halterung für auswechselbare Informationsträger mit einem Befestigungsteil zum Festlegen an Randbereichen von Regalen, Behältern und dergleichen, wobei das Befestigungsteil annähernd C-förmig gestaltet ist und an seinen freien Enden aufeinander zugerichtete Aufnahmenuten für entsprechend ausgebildete Stege aufweist, die an der Rückseite der aus einer Rückwand und einer transparenten Vorderwand gebildeten Aufnahmetasche für die Informationsträger ausgeformt sind.

Eine derartige Halterung ist aus der US-A 4 557 064 bekannt. Bei der dort beschriebenen Kombination zwischen Halterung und auswechselbarem Informationsträger ist ein spezielles Halteelement vorgesehen, welches in seinem Kopfbereich eine U-förmige Aufnahme mit aufeinander zugerichteten, flexiblen Haltezungen aufweist. In diese U-förmige Aufnahme wird von unten der Informationsträger mit einem Teilbereich eingeschoben, wobei die flexiblen Haltezungen den Informationsträger in dem eingeschobenen Teilbereich festhalten. Der für die Information wesentliche Teilbereich des Informationsträgers ragt aus der U-förmigen Aufnahme heraus und ist so für den Betrachter sichtbar.

Die U-förmige Aufnahmetasche besitzt eine nach unten verlängerte Rückwand, an deren Rückseite die Stege für den halternden Eingriff in die Aufnahmenuten des C-förmigen Befestigungsteils angeformt sind. Zum halternden Einsetzen dieser Stege in die Aufnahmenuten des Befestigungsteils wird die Rückwand- durch Krafteinwirkung auf ihre freien Enden gebogen. Dieses Biegen kann beispielsweise durch den Gegendruck zweier Finger einer menschlichen Hand erfolgen, wobei die Dicke der Rückwand den dabei erzielbaren Druckstärken angepaßt sein muß.

Durch diese Biegung werden die Stege an der Rückseite der Rückwand, die in voneinander wegweisenden Winkeln an der Rückseite angeformt sind, mit zunehmender Rundung der Rückwand aufeinander zubewegt. Dadurch verringert sich zunehmend die Entfernung der freien Enden dieser Stege voneinander, so daß die freien Enden der Stege nach der durch die Krafteinwirkung erfolgten Ausbauchung der Rückwand vom Befestigungsteil weg über die freien Enden der aufeinander zugerichteten Aufnahmenuten am Befestigungsteil geschoben werden können. Wenn in dieser Stellung die Krafteinwirkung auf die freien Enden der Rückwand weggenommen wird, schnappen die freien Enden der Stege an der Rückseite der Rückwand in die Aufnahmenuten des Befestigungsteils ein, d.h. die freien Enden der Stege hintergreifen die zugeordneten Randbereiche dieser Aufnahmenuten. Damit ist die Aufnahmetasche für den Informationsträger am Befestigungsteil festgelegt.

Obwohl mit dieser Methode eine Befestigung des Informationsträgers an dem Befestigungsteil möglich ist, ergeben sich größere Schwierigkeiten bei der Festlegung solcher Aufnahmetaschen über Kurzlängen hinaus. Hier muß die Biegekraft für die Rückwand in axialer Richtung fortlaufend aufgebracht werden, was bei der Flexibilität dieser leistenförmigen Gebilde über Kurzlängen hinaus schwierig ist.

Bei extrem langen Verrasterungsstrecken, z.B. bei langen Regalbaueinheiten, kann diese Verrasterung der Aufnahmetasche am Befestigungsteil von einer Person nicht mehr allein durchgeführt werden. Neben den geschilderten Montageschwierigkeiten ergeben sich dadurch auch erhöhte Kosten bei der Durchführung der Montage nach der geschilderten Methode.

Aus der DE-A 35 15 474 ist eine Halteleiste für auswechselbare Informationsträger bekannt, die aus einer Rückwand und einer transparenten Vorderwand gebildet ist. Die transparente Vorderwand ist an einer ihrer Längskanten einstückig mit der Rückwand verbunden und liegt mit ihrem freien Längsrand unter Vorspannung an der Rückwand an.

Der freie Längsrand kann von der Rückwand abgebogen werden, so daß die Aufnahmetasche mit dem Informationsträger bestückt werden kann. Danach wird die abgebogene transparente Vorderwand durch die materialimmanente Vorspannung mit ihrem freien Rand wieder an die Rückwand angedrückt, so daß die Aufnahmetasche für den Informationsträger wieder geschlossen ist.

Die vorbekannte Aufnahmetasche für Informationsträger wird an den Randbereichen von Regalen, Behältern und dergleichen mittels Verklebung festgelegt. Hierzu kann beispielsweise ein doppelseitiges Klebeband dienen, welches einerseits an der freien, außenliegenden Rückseite der Rückwand und andererseits an den Randbereichen der Regale, Behälter und dergleichen festgelegt ist. Hierbei muß die Haftwirkung des Klebers so stark sein, daß das Abbiegen der transparenten Vorderwand von der Rückwand ohne Beeinträchtigung des festen Sitzes der Rückwand am Regal erfolgen kann. Der Nachteil dieses Systems ist es, daß die beschriebene Aufnahmetasche für auswechselbare Informationsträger nicht auf jedem Untergrund festgelegt werden kann.

Hier setzt die Erfindung ein, die es sich zur Aufgabe gemacht hat, eine Halterung für auswechselbare Informationsträger anzugeben, die einerseits auf jedem Untergrund verwendbar ist und andererseits auf einfache Art und Weise festgelegt werden kann. Erfindungsgemäß wird hierzu vorgeschlagen, daß der erste Steg als Einhängelasche für die zugeordnete Aufnahmenut des Befestigungsteils mit einem annähernd rechtwinkelig von der Rückseite aufragenden Basisteil und einem kurzen, zum freien Rand der Rückseite geneigten Halteteil ausgebildet ist, daß der andere Steg in kurzem Abstand vom ersten Steg ebenfalls aus einem annähernd rechtwinkelig von der Rückseite aufragenden Basisteil besteht, welches in einen langgestreckten, in Gegenrichtung zum ersten Steg abgebogenen Halteteil übergeht, dessen freies Ende vor der gegenüberliegenden freien Kante der Rückseite endet, und daß an der Rückseite in definiertem Abstand vom Basisteil des zweiten Steges längsverlaufend wenigstens ein Druckelement angeformt ist, welches von dem abgebogenen Halteteil übergriffen ist.

Die erfindungsgemäße Halterung benutzt ein Befestigungsteil zum Festlegen an Randbereichen von Regalen, Behältern und dergleichen. Dieses Befestigungsteil kann beispielsweise aus Metall, Kunststoff oder dergleichen Materialien gefertigt sein. Es kann mittels Schrauben, Kleben, Nieten oder Kombinationen dieser Befestigungsmöglichkeiten auf der Unterlage festgelegt sein. Dieses Befestigungsteil ist annähernd C-förmig gestaltet und ist in bekannter Weise an seinen freien Enden mit aufeinander zugerichteten Aufnahmenuten ausgestattet. Erfindungsgemäß wird der erste, kürzere Halteteil in eine der Aufnahmenuten an den freien Enden des C-förmigen Befestigungsteils eingesetzt. In dieser Stellung liegt der zweite Steg mit seinem langgestreckten, in Gegenrichtung zum ersten Steg abgebogenen Halteteil den anderen Längsrand des C-förmigen Befestigungsteil übergreifend auf dem freien Schenkel der Aufnahmenut auf. Wird nunmehr - beispielsweise mit dem Finger einer Hand - von außen auf die Aufnahmetasche ein Druck in Richtung zum Befestigungsteil ausgeübt, wird dieser Druck über das Druckelement auf das langgestreckte Halteteil übertragen. Dieses langgestreckte Halteteil, welches aus definiert flexibel eingestelltem Material besteht, biegt sich mit zunehmendem Druck von außen immer weiter in den freien Innenraum des Befestigungsteils hinein. Dabei rutscht aufgrund der durch diese Ausbiegung bewirkten Verkürzung des langgestreckten Halteteils dessen freies Ende bis zur außenliegenden Kante der zugeordneten Aufnahmenut des Befestigungsteils, die bei Erreichen des Enddruckes von außen übersprungen wird. Dabei entspannt sich das langgestreckte Halteteil teilweise in diese Aufnahmenut hinein. Diese Entspannung wird verstärkt, wenn die eindrückende Kraft von außen aufgehoben wird. Dabei erreicht das freie Ende des langgestreckten Halteteils seinen Endsitz in der zugeordneten Aufnahmenut des Befestigungsteils. Die Abmessung des langgestreckten Halteteils ist gegenüber dem kurzen Halteteil des ersten Steges so gehalten, daß beide Stege bei Beendigung der Krafteinwirkung von außen fest in den Aufnahmenuten des Befestigungsteils sitzen und die Aufnahmetasche für die Informationsträger in ihrem Endsitz festlegen.

Die von außen einwirkende Kraft auf das langgestreckte Halteteil, die durch das Druckelement übertragen wird, ist gegenüber dem Kraftaufwand zur Befestigung solcher Leisten nach dem Stand der Technik äußerst gering. Auch die nach dem Stand der Technik gegebenen Montageschwierigkeiten bei größeren Leistenlängen treten bei der Halterung nach der Erfindung nicht mehr auf. Vielmehr kann die nach der Erfindung ausgebildete Aufnahmetasche von einer Person auch über größere Längen leicht und ohne Schwierigkeiten verlegt werden.

Das Druckelement nach der Erfindung kann in den verschiedensten Formen verwendet werden, z.B. als Steg, als Dreieck, als Pilzkopf, als Kugel. Hierbei kann das Druckelement im Querschnitt hohl oder kompakt sein. Da das Druckelement vorteilhaft einstückig mit der Aufnahmetasche hergestellt wird, kann bei dieser Herstellungsart jeweils die optimale Form des Druckelementes für den speziellen Verrasterungsfall und auch die Frage festgelegt werden, ob das Herstellungsverfahren einen kompakten oder hohlen Querschnitt erfordert.

In kinematischer Umkehr kann das Druckelement sowohl an der Rückseite der Rückwand der Aufnahmetasche als auch an der Innenseite des langgestreckten Halteteils angeformt sein, wobei es in diesem Fall mit einem freien Ende zur Oberfläche der Rückseite der Rückwand der Aufnahmetasche gerichtet ist.

Die erfindungsgemäße Aufnahmetasche mit der Ausbildung der beiden mit den unterschiedlich langen Halteteilen versehenen Stege an der Rückseite der Rückwand kann in zwei unterschiedlichen Richtungen längsverlaufend in die Aufnahmenuten des C-förmigen Befestigungsteil eingesetzt werden. Bei der einen Richtung läßt sich die transparente Vorderwand, die einstückig längsverlaufend an einem Längsrand mit der Rückwand verbunden ist, mit ihrem freien Ende vom unteren Bereich der Aufnahmetasche abbiegen, so daß der Informationsträger von unten in die Aufnahmetasche eingeschoben werden kann.

Bei der anderen Einclipsrichtung liegt die feste Verbindung zwischen transparenter Vorderwand und Rückwand im unteren Bereich, so daß sich das freie Ende der tansparenten Vorderwand im oberen Bereich von der Rückwand wegbiegen läßt und der Informationsträger von oben in die Aufnahmetasche eingesetzt werden kann. Die Wahl der Verclipsrichtung kann hierbei dem Einsatzzweck angepaßt werden.

In der Zeichnung sind Ausführungsbeispiele der erfindungsgemäßen Halterung schematisch dargestellt; es zeigt:

Fig. 1 den Einclipsvorgang gemäß der Erfindung im Querschnitt Figuren 1a bis 1c.

Fig. 2 verschiedene Ausbildungen des Druckelementes

Fig. 3 die in das Befestigungsteil eingeclipste Aufnahmetasche.

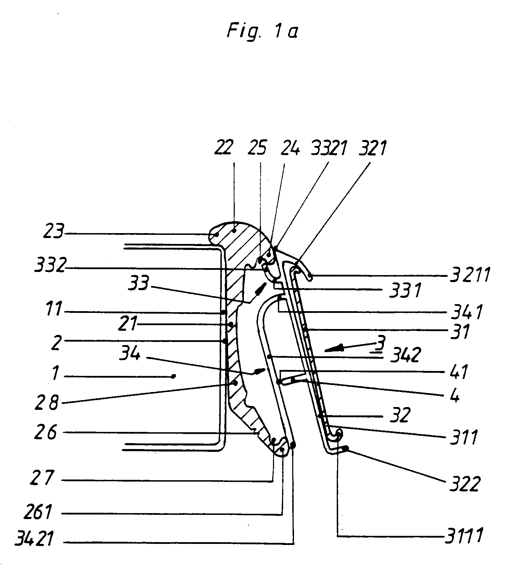

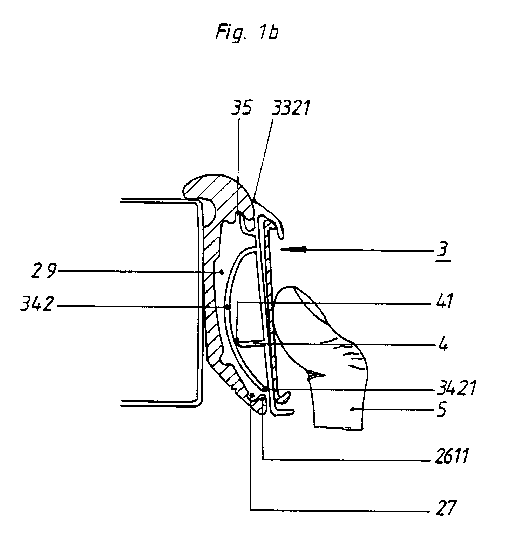

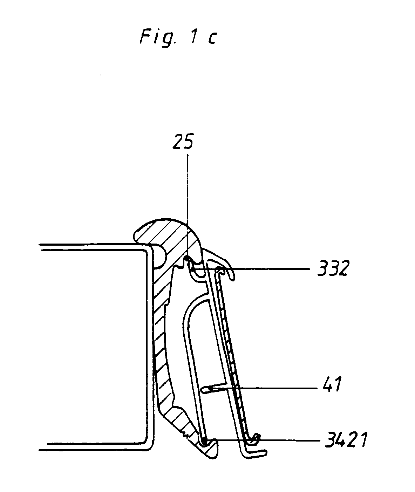

In Fig. 1 ist der Einclipsvorgang der Aufnahmetasche in das Befestigungsteil gemäß der Erfindung in drei Phasen dargestellt. Fig. 1a zeigt beispielsweise den Rand 11 eines Regals 1, an dem die Rückseite 21 des Befestigungsteils 2 festgelegt ist. Die Festlegung kann durch Kleben, Schrauben, Nieten, Dübeln oder Kombinationen dieser Befestigungsmöglichkeiten erfolgen. Das Befestigungsteil 2 besitzt einen pilzkopfförmigen Oberteil 22, welcher mit seinem oberen Rand 23 den zugeordneten Randbereich 11 des Regals 1 übergreift. Dadurch wird eine zusätzliche Befestigungssicherheit des Befestigungsteils 2 am Regal 1 erreicht. Im unteren Rand 24 des pilzkopfförmigen Oberteils ist eine längsverlaufend durchgehende Nut 25 ausgeformt. Das Befestigungsteil 2 verläuft in seinem unteren Bereich in einen fußförmigen, vom Rand 11 des Regals winkelförmig abragenden Teilbereich 26, in den eine in Richtung zur Nut 25 zeigende Nut 27 eingearbeitet ist. Der fußförmige Teilbereich 26 bildet mit dem pilzkopfförmigen Oberteil 22 und dem eigentlichen Leistenkörper 28 des Befestigungsteils 2 eine nach außen offene, C-förmige Profilform.

Aus Fig. 1a ergibt sich desweiteren die Aufnahmetasche 3 mit der transparenten Vorderwand 31 und der beispielsweise aus eingefärbtem Kunststoffmaterial bestehenden Rückwand 32. Die transparente Vorderwand 31 ist in der gezeigten Darstellung im oberen Bereich 321 der Rückwand 32 mit dieser einstückig verbunden. Der obere Bereich 321 der Rückwand 32 ragt dabei mit seinem freien Rand 3211 über die Verbindungsstelle schützend hinaus. Das freie Ende 311 der transparenten Vorderwand 31 liegt unter Vorspannung an der Innenseite der Rückwand 32 an. Dabei ist das freie Ende 311 der transparenten Vorderwand 31 im Bereich der Anlage in einem Bogen 3111 von der Rückwand abgebogen und dieser Bogen 3111 dient als Unterstützung beim Abheben des freien Endes 311 der transparenten Vorderwand 31 von der Rückwand 32. Die Rückwand 32 kann im Bereich des Bogens 3111 in einem Winkel 322 über dem Bogen 3111 abgebogen sein und damit als Schutz für diesen Bogen 3111 dienen.

Von der Rückseite der Rückwand 32 ragt im oberen Bereich der Steg 33 ab. Dieser Steg 33 besitzt einen annähernd rechtwinkelig von der Rückseite der Rückwand 32 aufragenden Basisteil 331 und einen relativ kurzen, zum freien Rand der Rückseite geneigten Halteteil 332. In kurzem Abstand vom Steg 33 ragt der Steg 34 von der Rückseite der Rückwand 32 ab. Der Steg 34 besitzt ebenfalls einen annähernd rechtwinkelig von der Rückseite der Rückwand 32 aufragenden Basisteil 341 und einen daran angeformten langgestreckten, in Gegenrichtung zum Halteteil 332 abgebogenen Halteteil 342. Das freie Ende 3421 des langgestreckten Halteteils 342 liegt in der gezeigten Darstellung am freien Ende 261 des fußförmigen Teilbereiches 26 an.

An der Rückseite der Rückwand 32 ragt in definiertem Abstand vom Basisteil 341 des Steges 34 längsverlaufend das Druckelement 4 ab, welches von dem langgestreckten, abgebogenen Halteteil 342 übergriffen ist.

Die Darstellung in Fig. 1a zeigt den erfindungsgemäßen Aufbau der Halterung vor Beginn der Druckeinwirkung auf die Aufnahmetasche 3.

Fig. 1b zeigt den Aufbau gemäß Fig. 1 nach Beginn der Druckeinwirkung auf die Aufnahmetasche 3. Der angedeutete Daumen 5 deutet an, daß hier nur eine geringe Druckkraft nötig ist, um den Aufbau gemäß Fig. 1a in die Stellung gemäß Fig. 1b zu bringen. Hierbei ist festzustellen, daß sich im oberen Bereich der vorläufigen Verbindung zwischen Befestigungsteil und Aufnahmetasche keine Änderung ergeben hat. Im mittleren und unteren Bereich dagegen ist deutlich zu sehen, daß über das Druckelement 4 die durch den Daumen 5 auf die Aufnahmetasche 3 aufgebrachte Druckkraft auf den langgestreckten, abgebogenen Halteteil 342 übertragen worden ist. Dieses Halteteil 342 ist in den freien Innenraum 29 des C-förmigen Befestigungsteils 2 eingedrückt, wodurch sich über die Ausbauchung eine relative Längenverkürzung des langgestreckten, abgebogenen Halteteils 342 ergeben hat. Diese Längenverkürzung hat bewirkt, daß das freie Ende 3421 des Halteteils 342 nach oben bis zur Kante 2611 des freien Endes 261 des fußförmigen Teilbereiches 26 gewandert ist. Wenn der Druck gegenüber der in Fig. 1b gezeigten Krafteinwirkung auf die Aufnahmetasche 3 noch ein wenig verstärkt wird, rutscht das freie Ende 3421 des Halteteils 342 über die Kante 2611 des freien Endes 261 und schnappt in die Aufnahmenut 27 ein. Diese Stellung ist in Fig. 1c gezeigte.

In Fig. 1c ist die durch die Krafteinwirkung von außen über das Druckelement 4 auf das Halteteil 342 einwirkende Kraft wieder aufgehoben. Das Halteteil 342 hat sich insofern entspannt, als es mit seinem freien Ende 3421 völlig in die Aufnahmenut 27 eingetaucht ist. Die Abmessungen des Steges 33 und des Steges 34 sind dabei so gehalten, daß die beim Eindrücken gemäß Fig. 1b zunehmende Federkraft bei der Endsituation gemäß Fig. 1c wenigstens teilweise erhalten bleibt. Dadurch liegt das freie Ende 3321 des Halteteils 332 des Steges 33 unter Vorspannung am Nutengrund der Nut 25 an.

Auf der anderen Seite liegt das freie Ende 3421 des Halteteils 342 des Steges 34 am Grund der Nut 27 ebenfalls unter Vorspannung an. Diese Vorspannung kann von den Abmessungen der Stege 33, 34 so eingestellt sein, daß sich eine Spannhalterung in der Aufnahmetasche ähnlich einer Rastverbindung innerhalb des C-förmigen Befestigungsteils ergibt. Die bei dieser Spannhalterung wirkenden Kräfte ergeben auch bei kleiner Abmessung der im Befestigungsteil 2 hintergriffenen Rastbereiche 24, 261 eine feste Verbindung, über die ein ungewolltes Ausrasten der Aufnahmetasche aus ihrem Rastsitz verhindert wird. Aus Fig. 1c ist letztlich zu entnehmen, daß in diesem Rastzustand das Druckelement 4 nahezu wieder in die Ausgangslage gemäß Fig. 1a zurückgegangen ist. Aufgrund der oben beschriebenen Restspannkraft im Bereich der Stege 33, 34 ist jedoch zu erwarten, daß das Druckelement 4 in der Stellung gemäß Fig. 1c nicht an der Innenwand des langgestreckten, abgebogenen Halteteils 342 anliegt.

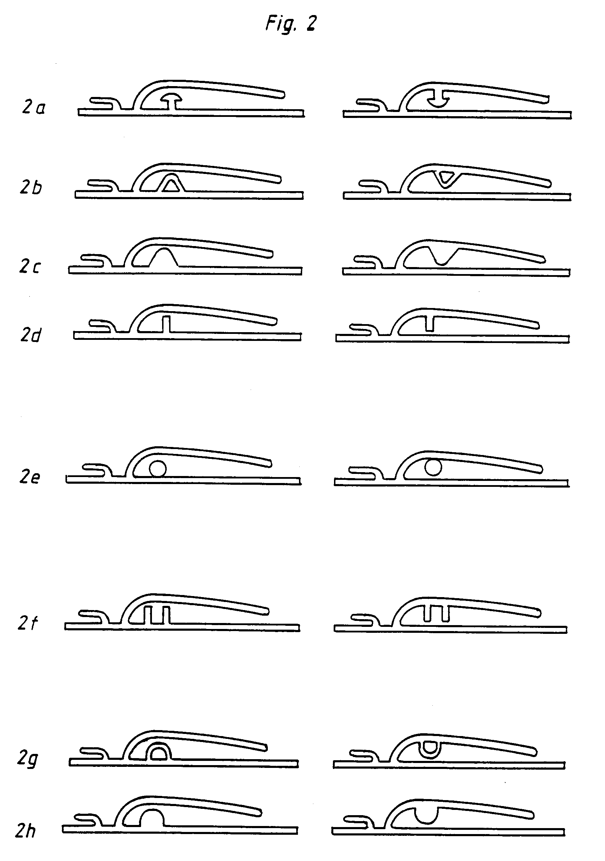

Fig. 2 zeigt verschiedene Ausbildungen des Druckelementes 4, wobei jeweils die Anlenkung des gleichgeformten Druckelementes 4 entweder an die Rückseite der Rückwand 32 oder an die Innenseite des langgestreckten, abgebogenen Halteteils 342 erfolgt ist. So zeigt Fig. 2a ein pilzkopfförmiges Druckelement, Fig. 2b ein dreieckförmiges, hohles Druckelement, Fig. 2c ein dreieckförmiges Druckelement mit kompaktem Querschnitt, Fig. 2d ein stegförmiges Druckelement, Fig. 2e ein kreisförmiges Druckelement, Fig. 2f zwei nebeneinander liegende stegförmige Druckelemente, Fig. 2g ein halbkreisförmiges Druckelement mit hohlem Querschnitt und Fig. 2h ein halbkreisförmiges Druckelement mit kompaktem Querschnitt. Die in Fig. 2 gezeigten Querschnittsformen sind lediglich beispielhaft dargestellt. Weiterhin sind denkbar quadratisch, als Kegel, als Wellenlinie oder ähnlich geformte Druckelemente.

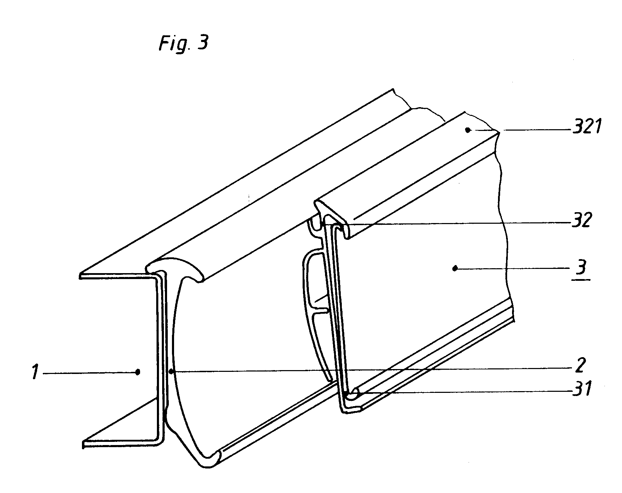

Fig. 3 zeigt schließlich noch in perspektivischer Ansicht die in das Befestigungsteil 2 eingeclipste Aufnahmetasche 3. Das Befestigungsteil 2 ist hierbei - wie in Fig. 1 - als Beispiel an einen Regalboden 1 angebunden.

Zur Legende wird auf die Beschreibung zu Fig. 1 verwiesen.

Die Aufnahmetasche 3 kann - wie im Beispiel beschrieben - einstückig im Koextrusionsverfahren hergestellt werden, wobei die transparente Vorderwand 31 einstückig an den Abdeckschenkel 321 in der gezeigten Form angespritzt ist. Die Verbindung zwischen der transparenten Vorderwand 31 und der Rückwand 32 kann an der Verbindungsstelle jedoch auch durch Kleben, Schweißen oder ähnliche Verbindungsmethoden erfolgen.

**Patentansprüche**

1. Halterung für auswechselbare Informationsträger mit einem Befestigungsteil zum Festlegen an Randbereichen von Regalen, Behältern und dergleichen, wobei das Befestigungsteil annähernd C-förmig gestaltet ist und an seinen freien Enden aufeinander zugerichtete Aufnahmenuten für entsprechend ausgebildete Stege aufweist, die an der Rückseite der aus einer Rückwand und einer transparenten Vorderwand gebildeten Aufnahmetasche für die Informationsträger ausgeformt sind, dadurch gekennzeichnet, daß der Steg (33) als Einhängelasche für die zugeordnete Aufnahmenut (25) des Befestigungsteils (2) mit einem annähernd rechtwinkelig von der Rückseite aufragenden Basisteil (331) und einem kurzen, zum freien Rand der Rückseite (32) geneigten Halteteil (332) ausgebildet ist, daß der Steg (34) im kurzen Abstand vom Steg (33) ebenfalls aus einem annähernd rechtwinkelig von der Rückseite aufragenden Basisteil (341) besteht, welches in einen langgestreckten, in Gegenrichtung zum Halteteil (332) abgebogenen Halteteil (342) übergeht, dessen freies Ende (3421) vor der gegenüberliegenden freien Kante (322) der Rückseite (32) endet, und daß an der Rückseite (32) in definiertem Abstand vom Basisteil (341) des Steges (34) längsverlaufend wenigstens ein Druckelement (4) angeformt ist, welches von dem abgebogenen Halteteil (342) übergriffen ist.

2. Halterung nach Anspruch 1, dadurch gekennzeichnet, daß das Druckelement (4) als Steg, Dreieck, Pilzkopf oder Kreis geformt ist.

3. Halterung nach Ansprüchen 1 und 2, dadurch gekennzeichnet, daß das Druckelement im Querschnitt hohl oder kompakt ausgebildet ist.

4. Halterung nach Anspruch 1, dadurch gekennzeichnet, daß das Druckelement (4) an der Innenseite des abgebogenen Halteteils (342) angeformt und mit seinem freien Ende (41) zur Oberfläche der Rückseite der Rückwand (32) der Aufnahmetasche (3) für die Informationsträger gerichtet ist.

Fig. 1 a

Fig. 1b

Fig. 1 c

25

332

41

3421

Fig. 2

Fig. 3

| | EINSCHLÄGIGE DOKUMENTE | | EP 92103121.7 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) | |
| Y | EP - A - 0 377 772 (KUNSTSTOFF-VERARBEITUNGSGMBH DIRK A. BRÜGMANN) * Fig. 1,2 * | 1 | G 09 F 3/20 | |
| A | | 2,3,4 | | |
| | -- | | | |
| Y | GB - A - 2 154 778 (KENNEY) * Fig. 1,3,6 * | 1 | | |
| | ---- | | | |
| | | | **RECHERCHIERTE SACHGEBIETE (Int. Cl.⁵)** | |
| | | | G 09 F 3/00 G 09 F 7/00 | |

Der vorliegende Recherchenbericht wurde für alle Patentansprüche erstellt.

| Recherchenort | Abschlußdatum der Recherche | Prüfer |
|---|---|---|
| WIEN | 14-05-1992 | BRÄUER |